# EUROPÄISCHE PATENTSCHRIFT

(11) **EP 1 085 190 B1**
(45) Veröffentlichungstag und Bekanntmachung des Hinweises auf die Patenterteilung: **07.04.2004**
(21) Anmeldenummer: 00119669.0
(22) Anmeldetag: 08.09.2000
(51) Int. Cl.: F02D 41/20, H01L 41/04

(54) **Verfahren und Vorrichtung zum Laden wenigstens eines kapazitiven Stellgliedes**
Method and device for charging at least a capacitive actuator
Procédé et dispositif pour charger au moins un actionneur capacitif

(30) Priorität: 17.09.1999 DE 19944734
(43) Veröffentlichungstag der Anmeldung: 21.03.2001
(73) Patentinhaber: SIEMENS AKTIENGESELLSCHAFT, 80333 München (DE)
(72) Erfinder: Lingl, Wolfgang, 93057 Regensburg (DE); Schrod, Walter, 93057 Regensburg (DE)

(56) Entgegenhaltungen:
- DE-A- 19 854 789
- DE-C- 19 652 801
- DE-C- 19 723 932
- PATENT ABSTRACTS OF JAPAN vol. 015, no. 057 (M-1080), 12. Februar 1991 (1991-02-12) & JP 02 286852 A (TOYOTA MOTOR CORP), 27. November 1990 (1990-11-27)

## Beschreibung

Die Erfindung betrifft ein Verfahren zum Laden wenigstens eines kapazitiven Stellgliedes, insbesondere eines Kraftstoffeinspritzventils einer Brennkraftmaschine. Die Erfindung betrifft auch eine Vorrichtung zur Durchführung dieses Verfahrens.

Einer der Vorteile bei der Ansteuerung von Kraftstoffeinspritzventilen einer Brennkraftmaschine mittels Piezostellgliedern statt Solenoiden ist die kurze Schaltzeit der Stellglieder, die zu steilen Nadelflanken und geringen Streuungen der eingespritzten Kraftstoffmengen führt. Aus verbrennungstechnischer Sicht sind möglichst kurze Ladezeiten anzustreben.

Zur Erzielung eines sanfteren Verbrennungsverlaufs wird die Kraftstoffmenge in Vor- und Haupteinspritzmenge geteilt, was eine langsamere Verbrennung und damit eine Verbrennungsgeräusch-Reduzierung ermöglicht. Die Stellglieder werden bisher mit einer konstanten Lade- und Entladezeit (Dauer der Umladung von einer Energiequelle auf das Stellglied oder umgekehrt) angesteuert, die sehr kurz sein muß (beispielsweise 100µs), damit eine vorgegebene Kraftstoff-Voreinspritzmenge auch im obersten Last- oder Drehzahlbereich der Brennkraftmaschine noch eingespritzt werden kann.

Der Ladeprozeß erfolgt beispielsweise als Umschwingvorgang der Ladung von einer Ladungsquelle (einer Reihenschaltung eines Lade- und eines Umladekondensators) über eine Umladespule zum Stellglied, wobei die Induktivität der Umladespule zusammen mit den Kapazitäten der Kondensatoren und des Stellgliedes die Zeitkonstante für den Lade- und Entladevorgang (die Lade- und Entladezeit) bestimmt. Eine derartige Vorrichtung ist aus DE 19652801 bekannt.

Die kurzen Ladezeiten führen jedoch zu hohen Geräuschemissionen in für menschliche Ohren unangenehmen Frequenzbereichen. Dies wird beispielsweise in einem Kraftfahrzeug dann als sehr störend empfunden, wenn im Leerlauf der Brennkraftmaschine die Verbrennungsgeräusche niedrig sind.

Es ist Aufgabe der Erfindung, ein Verfahren zum Ansteuern eines kapazitiven Stellgliedes eines Kraftstoffeinspritzventils einer Brennkraftmaschine anzugeben, welches eine deutliche Verminderung der Stellglied-Geräuschemissionen ermöglicht. Es ist auch Aufgabe der Erfindung, eine Vorrichtung zur Durchführung dieses Verfahrens zu schaffen, die mit einem geringen Bauteileaufwand auskommt.

Diese Aufgabe wird erfindungsgemäß durch die im Anspruch 1 genannten Merkmale gelöst. Mit einer Vorrichtung gemäß Anspruch 2 werden die Lade- und Entladezeiten eines kapazitiven Stellgliedes, insbesondere im Niedriglast- und Leerlaufbereich der Brennkraftmaschine, durch verschiedene Maßnahmen während des Ladevorgangs variiert, beispielsweise in einem Bereich zwischen 100µs und 200µs.

Das erfindungsgemäße Verfahren besteht darin, daß zur Erzielung kürzerer Ladezeiten (und damit geringer Einspritzmengen) der während des Ladevorgangs des kapazitiven Stellgliedes in dem aus Kondensatoren, Umladespule und kapazitivem Stellglied bestehenden Resonanzkreis fließende Strom in einen Freilaufkreis umgeleitet wird, wodurch der Ladevorgang wesentlich verkürzt wird.

Für die Wahl optimaler Ladezeiten gilt: die Dauer der Ladezeit begrenzt die minimale Kraftstoff-Einspritzdauer. Dies ist insbesondere bei hohen Einspritzdrücken kritisch, weil die eingespritzte Kraftstoffmenge bei gleicher Einspritzdauer mit dem zur Last proportionalen Kraftstoffdruck ansteigt. Zur Erzielung einer bestimmten Einspritzmenge, insbesondere einer geringen Voreinspritzmenge, sind daher mit wachsendem Kraftstoffdruck immer kürzere Einspritzdauern erforderlich.

Bei einer Haupteinspritzung sind die Einspritzmengen hingegen last- bzw. druckabhängig. Bei geringer Last werden kleine Einspritzmengen benötigt, bei großer Last aber große Einspritzmengen bei großem Kraftstoffdruck. Diese Korrelation zwischen Kraftstoffmenge und Kraftstoffdruck ermöglicht die Verwendung längerer Ladezeiten für die Haupteinspritzung auch im Hochlastbereich.

Unterschiedliche Ladezeiten eines kapazitiven Stellgliedes haben innerhalb gewisser Grenzen, beispielsweise zwischen 100µs und 200µs, bis auf Totzeiteffekte (Verzögerungen von Einspritzbeginn und -ende), die durch zeitliche Verschiebung der Ansteuersignale kompensiert werden können, keinen Einfluß auf den für einen Verbrennungsprozeß relevanten Einspritzverlauf.

Ausführungsbeispiele einer Vorrichtung zur Durchführung des erfindungsgemäßen Verfahrens sind im folgenden unter Bezugnahme auf die schematische Zeichnung näher erläutert. Es zeigen:
- Figur 1: ein erstes Ausführungsbeispiel nach der Erfindung,
- Figur 2: ein Diagramm der Lade- und Entladeströme des Ausführungsbeispiels nach Figur 1,
- Figur 3: ein zweites Ausführungsbeispiel nach der Erfindung, und
- Figur 4: ein Diagramm der Lade- und Entladeströme des Ausführungsbeispiels nach Figur 3.

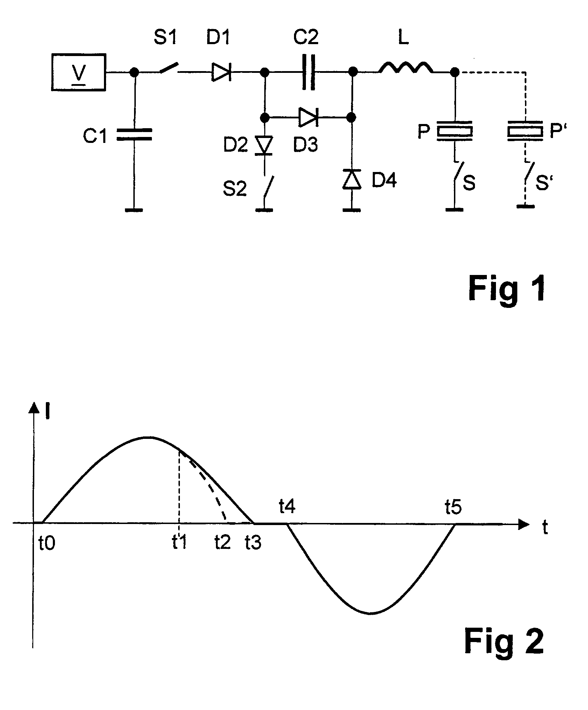

Die prinzipielle Schaltung einer bekannten Vorrichtung zum Laden und Entladen eines kapazitiven Stellgliedes P nach Figur 1 - mit Ausnahme der beiden Dioden D3 und D4 - besteht aus einer beidseitig mit Massebezugspotential verbundenen Reihenschaltung einer Ladungsquelle (hier eines von einer Energiequelle V ladbaren Ladekondensators C1 und eines Umladekondensators C2), eines Ladeschalters S1, einer ersten Diode D1, einer Umladespule L und eines oder mehrerer parallelgeschalteter Stellglieder P, P', wobei mit jedem Stellglied P, P' ein Auswahlschalter S, S' in Reihe geschaltet ist. Der zum Ladeschalter S1 führende Anschluß des Umladekondensators C2 ist über einen mit einer zweiten Diode D2 in Reihe liegenden Entladeschalter S2 mit Massebezugspotential GND verbindbar. Die beiden Schalter S1 und S2 werden von einer Steuerschaltung ST gesteuert, welche nicht dargestellt ist. Die Kapazität des Ladekondensators C1 sei wesentlich größer als die des Umladekondensators C2: C1 » C2.

Wenn von Lade-, Entlade- oder Auswahlschaltern gesprochen wird, so sind darunter vorzugsweise Schalter zu verstehen, die leitend oder nichtleitend geschaltet werden, beispielsweise Thyristoren, oder MOSFET's (mit einer Diode in Reihenschaltung, falls der Stromfluß nur in eine Richtung erfolgen darf).

Das Laden eines Stellgliedes P erfolgt bei dieser bekannten Schaltung durch leitend schalten des Ladeschalters S1 und des dem Stellglied zugeordneten Auswahlschalters S im Zeitpunkt t0 (Figur 2). Dabei schwingt die vorher den Kondensatoren C1 und C2 zugeführte Ladung mit einem Strom I in Form einer halben Sinusschwingung (ausgezogene Kurve in Figur 2) von diesen beiden Kondensatoren über die Umladespule L zum Stellglied P. In dieser Zeit, der Ladezeit, steigt die Stellgliedspannung U auf einen bestimmten Wert, und das Stellglied P öffnet das Kraftstoffeinspritzventil.

Wenn der Strom I im Zeitpunkt t3 zu Null wird, wird der Ladeschalter S1 wieder nichtleitend, und die Stellgliedspannung U bleibt erhalten, bis der Entladevorgang mit dem leitendschalten des Entladeschalters S2 im Zeitpunkt t4 beginnt. Nun schwingt die Ladung vom Stellglied P über die Umladespule L in den Umladekondensator C2; die Stellgliedspannung U geht wieder nach null, der Strom I wird im Zeitpunkt t5 zu Null, das Kraftstoffeinspritzventil wird vom Stellglied P geschlossen und der Entladeschalter S2 wird nichtleitend. Der Auswahlschalter S muß vor dem nächsten Ladevorgang wieder nichtleitend gesteuert werden, wenn anschließend ein anderes Stellglied angesteuert werden soll. Damit ist ein Einspritzvorgang beendet. Eine Rückladung in den Ladekondensator C1 wird durch die erste Diode D1 verhindert.

Durch Einfügen einer dritten Diode D3 parallel zum Umladekondensator C2, die in Richtung zur Umladespule L hin stromleitend ist, und einer vierten Diode D4 zwischen Bezugspotential GND und dem Verbindungspunkt von Umladekondensator C2 und Umladespule L, die zur Umladespule L hin stromleitend ist, ergibt sich die in Figur 1 gezeigte Schaltung eines ersten Ausführungsbeispiels nach der Erfindung.

Die Arbeitsweise dieser Schaltung wird nachstehend anhand des in Figur 2 dargestellten Diagramms des Stromverlaufs I im Stellglied P erklärt.

Zum Zeitpunkt t0 werden, wie bei der bekannten Schaltung, der Ladeschalter S1 und der Auswahlschalter S gleichzeitig leitend gesteuert, wodurch das Stellglied P aus den vorher geladenen Kondensatoren C1 und C2 über die Umladespule L geladen wird und ein sinusförmiger Strom I durch das Stellglied P zu fließen beginnt. Bleiben beide Schalter S1 und S (ausgezogene Kurve) leitend, bis der Strom I im Zeitpunkt t3 zu Null wird, so beträgt die Ladezeit wie bei der bekannten Schaltung auch hier beispielsweise t3-t0 = 200µs.

Erfindungsgemäß wird nun zur Erzielung einer kürzeren Ladezeit der Ladeschalter S1 vorzeitig im Zeitpunkt t1 nichtleitend gesteuert. Dadurch wird nun der Stromkreislauf des durch die Umladespule L fließenden Stromes I über das Stellglied P und die vierte Diode D4 geschlossen, wodurch der Strom I (gestrichelte Kurve) schnell abfällt und bereits im Zeitpunkt t2 zu Null wird. Durch diese, gleichsam einen Freilauf für die Umladespule L darstellende Maßnahme wird die Ladezeit verkürzt; sie hat nur noch die Dauer t2 - t0. Das Ende der im Zeitpunkt t0 beginnenden Ladezeit kann auf diese Weise zwischen t1 und t3 variieren, wodurch Ladezeiten von 100µs bis zum gewählten Maximum, hier 200µs, gewählt werden können.

Das Entladen des Stellgliedes P erfolgt, wie bereits oben beschrieben, beginnend im Zeitpunkt t4 und endend im Zeitpunkt t5.

Durch die verkürzte Ladezeit, die im Zeitpunkt t2 endet, kann die Entladung des Stellgliedes P bereits im Zeitpunkt t4 = t2 beginnen, wenn eine minimale Kraftstoffeinspritzmenge des Kraftstoffeinspritzventils gefordert wird.

Der jeweilige Auswahlschalter, S oder S', muß mindestens vom Beginn (t0) der Ladezeit bis zum Ende der Entladezeit (t5) leitend sein.

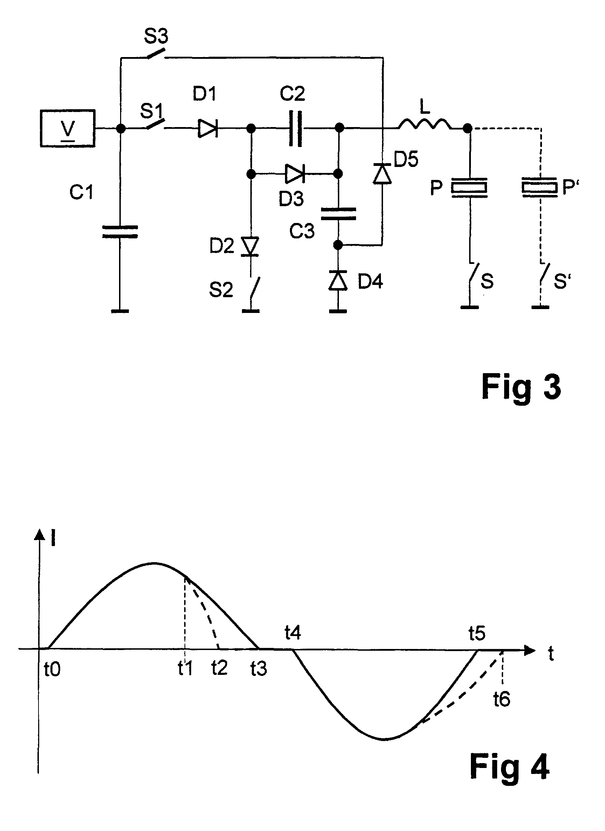

Figur 3 zeigt die prinzipielle Schaltung eines zweiten Ausführungsbeispiels nach der Erfindung, welche sich von der Schaltung nach Figur 1 dadurch unterscheidet, daß mit der vierten Diode D4 eine fünfte Diode D5 mit gleicher Stromdurchlaßrichtung in Reihe geschaltet ist, die über einen Schalter S3 mit dem Ladekondensator C1 verbindbar ist, und daß zwischen der vierten Diode D4 und dem Umladekondensator C2 ein weiterer Kondensator C3 geschaltet ist.

Diese Schaltung, deren Funktion anhand der Figuren 3 und 4 anschließend erklärt wird, ermöglicht es, zumindest einen Teil der im Augenblick des vorzeitigen Abbruchs des Ladevorgangs in der Umladespule L gespeicherten Energie im weiteren Kondensator C3 zwischenzuspeichern, was den Freilauf und damit das Abbrechen des Ladevorgangs beschleunigt. Beim anschließenden Entladen des Stellgliedes P wird die zwischengespeicherte Energie in den Ladekondensator C1 zurückgespeichert, wie nachstehend erklärt.

Der Ladevorgang erfolgt wie bei dem Ausführungsbeispiel nach Figur 1. Zum Zeitpunkt t0 wird der Ladeschalter S1 leitend gesteuert, wodurch das Stellglied P aus der Reihenschaltung des Ladekondensators C1 und des Umladekondensators C2 über die Umladespule L geladen wird und ein sinusförmiger Strom I durch das Stellglied P, welches durch den Auswahlschalter S ausgewählt wurde, zu fließen beginnt. Wird der Ladevorgang nicht unterbrochen, so endet er zum Zeitpunkt t3.

Zur Erzielung einer kürzeren Ladezeit wird der Ladeschalter S1 vorzeitig im Zeitpunkt t1 wieder nichtleitend gesteuert. Dadurch erfolgt ab diesem Zeitpunkt der Stromfluß von der Umladespule L zum Stellglied P und von diesem über den Auswahlschalter S, die vierte Diode D4 und den weiteren Kondensator C3 zurück zur Umladespule L, bis dieser Strom im Zeitpunkt t2 zu Null wird (gestrichelte Kurve von t1 bis t2 in Figur 4). Durch den zwischengeschalteten, zunächst ungeladenen, weiteren Kondensator C3, in welchem der Teil der in der Umladespule L gespeicherten Energie, der nicht im Stellglied gespeichert ist, zwischengespeichert wird, ergibt sich ein Schwingkreis mit anderer Zeitkonstante, die durch die Kapazität des weiteren Kondensators C3 beeinflußt werden kann. Dadurch wird die Ladezeit des Stellgliedes schneller beendet als bei dem Ausführungsbeispiel nach Figur 1.

Beim Entladen des Stellgliedes P, im Zeitpunkt t4 beginnend, wird der Entladeschalter S2 und synchron mit ihm der weitere Schalter S3 leitend gesteuert. Dadurch wird das Stellglied P über die Umladespule L zunächst in den Umladekondensator C2 entladen, bis die Summe der Spannungen am Umladekondensator C2 und am weiteren Kondensator C3 die Spannung am Ladekondensator C1 übersteigt, woraufhin dann der weitere Kondensator C3 in den wesentlich größeren Ladekondensator C1 entladen wird. Dadurch verlängert sich die Entladezeit, die beim Ausführungsbeispiel nach Figur 1 im Zeitpunkt t5 beendet wäre, geringfügig bis zum Zeitpunkt t6 (gestrichelte Kurve in Figur 4).

Nach dem Ende des Entladevorgangs sind die Anfangsbedingungen für die nächste Stellgliedladung wieder erfüllt: die Spannung am Umladekondensator C2 ist gleich der Spannung am Ladekondensator C1, und der weitere Kondensator C3 ist nicht geladen.

## Patentansprüche

1. Verfahren zum Laden wenigstens eines kapazitiven Stellgliedes (P, P'). mittels eines Schwingkreises, der aus einer kapazitiven Ladungsquelle (C1, C2), einer Umladespule (L), und dem wenigstens einen Stellglied (P, P') besteht,
**dadurch gekennzeichnet,**
- **daß** die Kapazität (C1 + C2) der Ladungsquelle für eine vorgegebene maximale Ladezeit (t3 - t0) bemessen ist, und
- **daß** zur Erzielung einer kürzeren Ladezeit (t2 - t0) der Schwingkreis vorzeitig zu einem bestimmten Zeitpunkt (t1) nach Beginn (t0) des Ladevorgangs aufgetrennt und in einen Freilaufkreis, der die Umladespule (L) und das Stellglied (P, P') enthält, umgeschaltet wird.

2. Vorrichtung zur Durchführung des Verfahrens nach Anspruch 1, mit einer Reihenschaltung einer Ladungsquelle, welche aus einem von einer Energiequelle (V) ladbaren Ladekondensator (C1) und einem Umladekondensator (C2) besteht, eines Ladeschalters (S1), einer ersten Diode (D1), einer Umladespule (L) und dem Stellglied (P, P'), und mit einem Entladeschalter (S2), der den Verbindungspunkt von erster Diode (D1) und Umladekondensator (C2) über eine zweite Diode (D2) mit einem Bezugspotential (GND) verbindet, wobei die zweite Diode (D2) zum Bezugspotential (GND) hin stromleitend ist,
**dadurch gekennzeichnet,**
- **daß** parallel zum Umladekondensator (C2) eine in Richtung zum Stellglied (P, P') hin stromleitende dritte Diode (D3) angeordnet ist, und
- **daß** zwischen dem Bezugspotential (GND) und dem Verbindungspunkt von Umladekondensator (C2) und Umladespule (L) eine vom Bezugspotential (GND) in Richtung zur Umladespule (L) hin stromleitende vierte Diode (D4) angeordnet ist.

3. Vorrichtung nach Anspruch 2, **dadurch gekennzeichnet,**
- **daß** zwischen der vierten Diode (D4) und dem Verbindungspunkt von Umladekondensator (C2) und Umladespule (L) ein weiterer Kondensator (C3) angeordnet ist, und
- **daß** eine fünfte Diode (D5) vorgesehen ist, die in Reihe mit der vierten Diode (D4) liegt und über einen weiteren Schalter (S3) mit dem Ladekondensator (C1) verbindbar ist.

4. Vorrichtung nach Anspruch 3, **dadurch gekennzeichnet,**
- **daß** der weitere Schalter (S3) synchron mit dem Entladeschalter (S2) leitend und nichtleitend gesteuert wird.

5. Vorrichtung nach Anspruch 3, **dadurch gekennzeichnet,**
- **daß** die Kapazität des Ladekondensators (C1) wesentlich größer als die des Umladekondensators (C2) und die Kapazität des weiteren Kondensators (C3) kleiner als die des Umladekondensators (C2) gewählt ist.

## Claims

1. Method for charging at least one capacitive actuator (P, P') by means of a harmonic circuit consisting of a capacitive charging source (C1, C2), a charge transfer coil (L), and the at least one actuator (P, P'),
**characterized in that**,
- the capacitance (C1 + C2) of the charging source is dimensioned for a specified maximum charging time (t3 - t0) and - that to achieve a shorter charging time (t2 - t0) the harmonic circuit is prematurely disconnected at a particular point (t1) after the beginning (t0) of the charge process and switched into an idle circuit containing the charge transfer coil (L) and the actuator (P, P').

2. Device for executing the method in accordance with Claim 1, with a series circuit comprising a charging source that consists of a charging capacitor (C1) chargeable from an energy source (V)and a charge transfer capacitor (C2), a charge switch (S1), a first diode (D1), a charge transfer coil (L) and the actuator (P, P'), and with a discharging capacitor (S2) that connects the connection point from the first diode (D1) and charge transfer capacitor (C2) via a second diode (D2) to a reference potential (GND), with the second diode (D2) conducting current to the reference potential (GND),
**characterized in that**,
- a third diode (D3) conduction current in the direction of the actuator S, S' is arranged in parallel to the charge transfer capacitor (C2), and
- between the reference potential (GND) and the connection point to the charge transfer capacitor (C2) and charge transfer coil (L) a fourth diode conducting current from the ground potential (GND) in the direction of the charge transfer capacitor (L).

3. Device according to Claim 2,
**characterized in that**
- between the fourth diode (D4) and the connection point of charge transfer capacitor (C2) and charge transfer coil (L) there is a further capacitor (C3) and
- a fifth diode (D5) is provided, which lies in series with the fourth diode (D4) and can be connected via a further switch (S3) with the charging capacitor (C1).

4. Device according to Claim 3,
**characterized in that**,
- the further switch (S3) is actuated synchronously with the discharge switch (S2) to be conducting and non-conducting.

5. Device according to Claim 3,
**characterized in that**,
- the capacitance of charging capacitor (C1) is selected to be significantly greater than that of the charge transfer capacitor (C2) and the capacitance of the further capacitor (C3) to be smaller than that of the charge transfer capacitor (C2).

## Revendications

1. Procédé de charge d'au moins un élément de réglage capacitif (P, P') au moyen d'un circuit oscillant, composé d'une source de charge capacitive (C1, C2), d'une bobine d'échange de charge (L), et de l'élément de réglage au nombre d'au moins un (P, P'),
**caractérisé en ce que**
- la capacité (C1 + C2) de la source de charge est dimensionnée pour un temps de charge maximal donné (t3 - t0), et
- **en ce que**, pour obtenir un temps de charge plus court (t2 - t0), le circuit oscillant est défait prématurément à un instant déterminé (t1) après le début (t0) du processus de charge et transformé en un circuit de régime libre qui contient la bobine d'échange de charge (L) et l'élément de réglage (P, P').

2. Dispositif pour l'exécution du procédé selon la revendication 1, comportant un circuit série d'une source de charge, qui est composée d'un condensateur (C1) pouvant être chargé par une source d'énergie (V) et d'un condensateur d'échange de charge (C2), d'un commutateur de charge (S1), d'une première diode (D1), d'une bobine d'échange de charge (L) et de l'élément de réglage (P, P'), et d'un commutateur de décharge (S2), qui relie le point de connexion de la première diode (D1) et du condensateur d'échange de charge (C2) par une deuxième diode (D2) a un potentiel de référence (GND), la deuxième diode (D2) étant conductrice du courant vers le potentiel de référence (GND),
**caractérisé en ce que**
- parallèlement au condensateur d'échange de charge (C2) est placée une troisième diode (D3) conduisant le courant vers l'élément de réglage (P, P'), et
- **en ce que** entre le potentiel de référence (GND) et le point de connexion du condensateur d'échange de charge C(2) et de la bobine d'échange de charge (L) est placée une quatrième diode (D4) conduisant le courant du potentiel de référence (GND) dans le sens allant vers de la bobine d'échange de charge (L).

3. Dispositif selon la revendication 2, **caractérisé en ce que**
- entre la quatrième diode (D4) et le point de connexion du condensateur d'échange de charge (C2) et de la bobine d'échange de charge (L), est placé un autre condensateur (C3), et
- **en ce qu'**il est prévu une cinquième diode (D5), qui est montée en série avec la quatrième diode (D4) et peut être connectée par un autre commutateur (S3) au condensateur de charge (C1).

4. Dispositif selon la revendication 3, **caractérisé en ce que**
- l'autre commutateur (S3) est rendu conducteur et non conducteur en synchronisme avec le commutateur de décharge (S2).

5. Dispositif selon la revendication 3, **caractérisé en ce que**
- la capacité du condensateur de charge (C1) est nettement plus grande que celle du condensateur d'échange de charge (C2) et la capacité de l'autre condensateur (C3) est choisie plus petite que celle du condensateur d'échange de charge (C2).
